# EUROPÄISCHE PATENTSCHRIFT

(11) **EP 4 323 306 B1**
(45) Veröffentlichungstag und Bekanntmachung des Hinweises auf die Patenterteilung: **30.04.2025**
(21) Anmeldenummer: 22722470.6
(22) Anmeldetag: 12.04.2022
(51) Int. Cl.: C01B 3/10, B01J 8/10

(54) **VERFAHREN UND VORRICHTUNG ZUR ERZEUGUNG VON WASSERSTOFF**
METHOD AND DEVICE FOR PRODUCING HYDROGEN
PROCÉDÉ ET DISPOSITIF DE PRODUCTION D'HYDROGÈNE

(30) Priorität: 13.04.2021 EP 21168075; 05.05.2021 EP 21172355
(43) Veröffentlichungstag der Anmeldung: 21.02.2024
(73) Patentinhaber: Üstün, Orhan, 8180 Bülach (CH)
(72) Erfinder: Üstün, Orhan, 8180 Bülach (CH)
(74) Vertreter: Liebetanz, Michael
(86) Internationale Anmeldenummer: PCT/EP2022/059728
(87) Internationale Veröffentlichungsnummer: WO 2022/218969

(56) Entgegenhaltungen:
- WO-A1-2009/133030
- WO-A1-2016/011473
- WO-A1-2020/048556
- CN-A- 109 970 025
- US-A1- 2020 280 084

## Beschreibung

### TECHNISCHES GEBIET

Die vorliegende Erfindung betrifft ein Verfahren und eine Vorrichtung zur Erzeugung von Wasserstoff. Das Verfahren ist ein Verfahren auf thermochemischem Weg, bei dem das Wasser durch ein Metall reduziert wird und das entstandene Metalloxid anschliessend durch ein in einer endothermen chemischen Reaktion erzeugtes Reduktionsmittel reduziert und erneut in den Reaktionsprozess eingebracht wird.

### STAND DER TECHNIK

Die Wasserstoffumsetzung ist eine Energielösung für die Zukunft, weil auf H₂ basierende Anwendungen die Umwelt wenig belasten.

Es gibt mehrere Methoden für die H₂-Erzeugung. Zur thermischen Erzeugung von Wasserstoff steht eine Gruppe von Prozessen zur Verfügung, insbesondere die Metalloxid-Verfahren. Ein Verfahren zur Erzeugung von Wasserstoff ist aus der EP 0 675 075 A1 bekannt. Die für die endothermische Reaktion erforderliche Energie wird durch Solaranlagen gewonnen.

Die DE 10 2005 017 216 A1 beschreibt eine thermische Wasserstoffherstellung in einer Gas-Festphasenreaktion. Dabei entsteht der Wasserstoff aus Wasserdampf an einer Oberfläche wenigstens eines Metalloxid in einer Gas-Festphasenreaktion, wobei in einer Reaktionskammer im ersten Schritt Wasserdampf durch die Anlagerung von Sauerstoff an das angeregte Metalloxid thermisch gespalten und Wasserstoff freigesetzt wird und in einem zweiten Schritt bei einer gegenüber dem ersten Schritt höheren Temperatur das Metalloxid regeneriert und gebundener Sauerstoff freigesetzt wird, sodass das Metalloxid für weitere Reaktion zur Verfügung steht.

Die WO 2016/011473 A1 als nächstliegender Stand der Technik betrifft eine Vorrichtung zum Herstellen von komprimiertem Wasserstoff umfassend einen druckstabilen Reaktor mit einem Reaktorraum, der eine metallhaltige Kontaktmasse aufweist, wobei der Reaktor mindestens eine Zuführleitung zum Zuführen von Fluiden in den Reaktorraum und mindestens eine Abführleitung zum Abführen von Fluiden aus dem Reaktorraum umfasst. Dabei ragt mindestens eine Abführleitung in den Reaktorraum oder mündet unmittelbar in diesen. Dazu ist diese Abführleitung mit einem Ventil zur Einstellung des Drucks innerhalb des Reaktorraums versehen. An mindestens einer Zuführleitung ist ein Fördermittel zum Einbringen eines wasserhaltigen Mediums in den Reaktorraum vorgesehen und über diese ist komprimierter Wasserstoff aus dem Reaktorraum abführbar. Der Reaktorraum weist dazu mindestens zwei voneinander getrennte und gasleitend miteinander verbundene Bereiche auf, von denen mindestens ein Bereich die metallhaltige Kontaktmasse und mindestens ein weiterer Bereich mindestens ein inertes Material umfasst.

Die US2020/280084 A1 offenbart einen drehbaren Reaktor zur Wasserstofferzeugung. Dabei wird Wasserstoff durch die Hydrolyse von Brennstoffen wie Lithiumaluminiumhydrid und Mischungen davon erzeugt. Das für die Hydrolyse benötigte Wasser kann aus dem Abgas der Brennstoffzelle entnommen werden. Das Wasser wird dem Reaktor vorzugsweise in Form eines durch einen Zerstäuber erzeugten Nebels zugeführt. Verteilervorrichtungen für die Brennstoffpellets im Reaktor verbessern dabei die Energiedichte des Systems.

Die WO 2009/133030 A1 beschreibt ein Verfahren für einen Reaktor zur Umsetzung und Verwertung von Wasserstoff aus Hüttenreststoffen. Der Hüttenreststoff wird bei einer Mindesttemperatur, die oberhalb von 50°C und unterhalb von 500°C liegt I, mit Wasser in Verbindung gebracht. Dabei entsteht Wasserstoffgas.

### DARSTELLUNG DER ERFINDUNG

Ausgehend von diesem Stand der Technik liegt der Erfindung die Aufgabe zu Grunde, ein verbessertes alternatives Verfahren anzugeben.

Diese Aufgabe wird mit den Merkmalen des Anspruchs 1 gelöst.

Die Erfindung bezieht sich auf die Anwendung der Induktionsenergie, der Verwendung von Eisenkörnern oder ähnlichem Schüttgut aus Metalloxiden und der Dampfenergie in einem drehbaren zylindrischen Generator.

Weitere Ausführungsformen sind in den abhängigen Ansprüchen angegeben.

Als Vorteil der Erfindung liefert das Tripel Induktionsenergie, Metallkörner und Wasserdampf mit dieser Lösung zur genannten Aufgabe der Erfindung einen Wasserstofferzeuger mit der neuen Möglichkeit, das Kosten/Nutzen-Verhältnis der Herstellung im Vergleich zu den bekannten Verfahren günstiger und umweltgerechter zu gestalten.

Die Prozesswärme, die hauptsächlich durch die Induktion erzeugt wird, entsteht unmittelbar in der Metallkörnermasse selbst, muss also nicht durch verlustbehaftete Leitungsverfahren übertragen werden.

Die Induktionserwärmung ist ein industriell etabliertes Prozessverfahren. Die Verfahren der Heizluftzufuhr, einer Gasflamme, eines elektrischen Ofens oder einer Beaufschlagung durch Laserlicht weisen alle einen schlechteren Wirkungsgrad gegenüber dem Induktionsverfahren auf. Die Prozess-Wärmeleistung ist für die Wasserstofferzeugung optimal steuerbar.

Es entstehen keine Verunreinigungen durch die externen Wärmequellen.

In diesem Metalloxid-Kreisprozess wird nicht nur die Emission von CO₂ vermieden, sondern es werden auch keine schädlichen Materialien eingesetzt und somit entstehen keine schädigende Auswirkungen auf die Ökologie.

Der gesamte Prozess kann auch nur mit Solar-, Wind- und Wasserkraft-Energien als Netz realisiert werden.

Der zusätzliche erzeugte Sauerstoff ermöglicht nicht nur einen wirtschaftlichen Gewinn, sondern auch die Erhöhung des Wirkungsgrades der gesamten Anlage.

Die Abwärmenutzung ermöglicht eine weitere Wirkungsgradsteigerung der gesamten Anlage.

Die kompakten Wasserstofferzeugungs-Generatoren können neben H2-Erzeugung auch zusätzlich z.B. hochwertige Fe3O4, reine Magnetite erzeugen, die in Stahl-, Chemie- und Pharmaindustrie und im Medizinsektor vermehrt eingesetzt werden.

Die Sauerstoff-Träger MO (Metalloxid) auf Eisenbasis mit hoher Aktivität für die Reduktions- und Oxidations-Reaktion, die umweltverträgliche Oxide wie Fe3O4, Fe2O3 und FeO haben, zeigen Sintereffekte bedingt durch hohe Reaktionstemperaturen und vermehrten Zyklen Aktivitätsverluste, z.B. An- und Abschwellen der Körner durch Phasenumwandlungen. Die vorliegende Erfindungslösung kann durch die SchwenkBeweglichkeit des Keramiktiegels die optimale Beimischung und Verteilung von z.B. Al2O3 als inerten Additiv im Keramiktiegel die Aktivitätsverluste eliminieren und die Zyklenfestigkeit der Eisenkörner erheblich verbessern.

Der Wasserstoff-Generator als abgeschlossener Reaktor hat den grossen Vorteil durch die gleichmässige Temperaturverteilung im Keramiktiegel ohne die Bildung von kalten Temperaturzonen, weil die genau dosierbare Induktionsenergie zusammen mit wechselseitiger Schwenkung des Keramiktiegels dies ermöglichen.

Neben Grossanlagen mit hohem Wirkungsgrad bieten sich vor allem die dezentrale Anwendung der kompakteren Anlagen im Vergleich mit anderen Verfahren, mit Metall- und Mischoxiden der meist vorhandenen und billigsten Eisenrohstoffe, deutliche Vorteile gegenüber etablierten Verfahren wie der Dampfreformierung oder der Elektrolyse, weil sie als dezentrale kompakte Anlagen z.B. für Stahl-, Chemie, Pharmaindustrien, Tankstellen und für Flug-, Seehäfen die erheblichen Kosten für "pipeline" und Tankwagen-Transporte mit Hochdruckspeicher eliminieren können.

Billigster Transport und zeitversetzte H₂-Erzeugung ermöglichen beim Eisenoxidverfahren die Entkopplung des Angebots erneuerbaren Ressourcen und der Energienachfrage, z.B. an Tankstellen ohne zusätzliche Hochdruck- oder Flüssigspeichersysteme zu installieren, weil die Speicherdichte der Eisenoxidmasse die volumetrische Speicherdichte der kommerziell verfügbaren 800 bar H₂-Hochdruckspeicher z.B. von den H₂-angetriebenen PKWs übersteigt.

Die Erfindungslösung kann unter anderem z.B. die enorme CO2-Belastung, verursacht durch die riesigen Transportschiffe, weitgehend eliminieren, weil sie als kompakteste Lösung in diesen Schiffen eingebaut werden kann, um für Schiffsmotoren Wasserstoff zu produzieren.

Die H₂- Erzeugungsanlagen gemäss der hier vorgestellten technischen Lehre können modular und anlagenspezifisch skaliert, d.h. in einem weiten Leistungsbereich verwendbar, gebaut werden. Diese Eigenschaft ermöglicht, dass eine vorhandene kleine Anlage mit zusätzlichem Modul(-en) leistungsmässig erweitert werden kann.

Die enorm grosse Oberfläche der Metallkörner (- Masse) für die Oxidation ermöglicht eine grössere Ausbeute in erster Linie für die Wasserstofferzeugung und Sauerstoffspaltung vom Metalloxid.

Der Wasserstoff-Generator braucht wenig Platz, wobei theoretisch gesehen ab einer Grundfläche von 1,5m x 3m Modulinstallationen machbar sind, was wirtschaftlich gesehen zum reduzierten Flächenbedarf der Gesamtanlagen-Installationen zu Gute kommt.

Eine in Zukunft erfolgreiche Verbreitung der Wasserstoff-Umsetzung für Fahrzeuge bedingt vor allem gut funktionierende Tankstellen. Die Erfindung ermöglicht einzigartig die H₂-Erzeugung und Verteilung an der Tankstelle ohne die sehr teuren Transportlastwagen mit Hochdruckspeicher, ohne Pipelines und ohne teure Hochdruckspeicher an der Tankstelle. Es braucht lediglich einen kleinen Puffer-Hochdruckspeicher an der Zapfsäule.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: zeigt eine Prinzipzeichnung einer Wasserstoff-Erzeugungsanlage gemäss einem Ausführungsbeispiel der Erfindung,
- Fig. 2: zeigt eine Vorrichtung zur Wasserstofferzeugung gemäss einem Ausführungsbeispiel der Erfindung,
- Fig. 3A & 3B: zeigen zusammen ein Flussdiagramm eines Verfahrens gemäss einem Ausführungsbeispiel der Erfindung, und
- Fig. 4: zeigt eine schematische im Wesentlichen perspektivische und teilweise geschnittene Darstellung des Keramiktiegels nach Fig. 2.

### BESCHREIBUNG BEVORZUGTER AUSFÜHRUNGSFORMEN

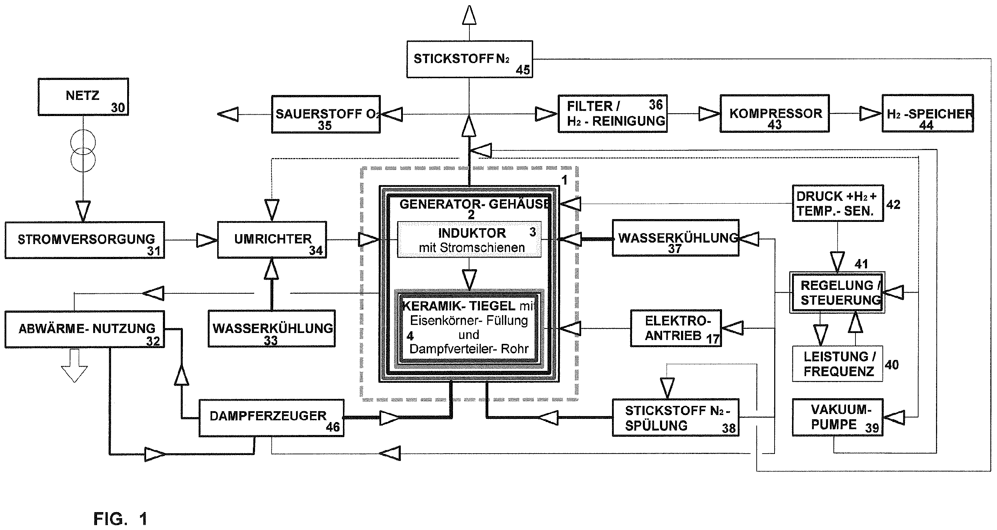

Fig. 1 zeigt eine Prinzipzeichnung einer Wasserstoff-Erzeugungsanlage gemäss einem Ausführungsbeispiel der Erfindung.

Der Wasserstoffgenerator 1 umfasst ein Generator-Gehäuse 2, das einen Induktor (Induktionsspule) 3, einen Keramik-Tiegel 4 als Reaktionskammer und ein Dampfverteilerrohr 6 beinhaltet.

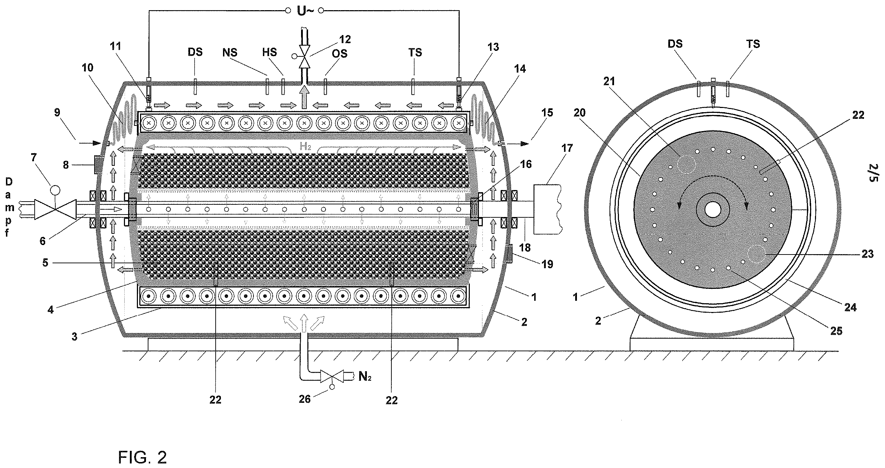

Zuerst wird daher Bezug auf die Fig. 2 genommen, die eine Vorrichtung zur Wasserstofferzeugung gemäss einem Ausführungsbeispiel der Erfindung zeigt, insbesondere den Wasserstoffgenerator 1. Dabei wird zudem teilweise auf in der Fig. 1 dargestellte Elemente des Gesamtsystems, wie dem Antrieb 17 für den Keramiktiegel 4, Bezug genommen.

Das metallische Gehäuse 2 hat vorzugsweise stirnseitig zwei (hier nicht dargestellte) verschraubte Wartungsdeckel und ist inseitig gegen Wasserstoff geschützt. Im Gehäuse 1 sind inseitig mindestens je ein Druck- und Temperatur-Sensor DS bzw. TS eingebaut. Unmittelbar beim Austritt vor dem aussenbefindlichen Sperrventil 12 oben im Leerraum sind Sensoren für H2, O2 und N2 (Fig. 2:HS, OS, NS) eingebaut.

Der Induktor 3 ist auf der äusseren Zylinderfläche des Keramik-Tiegels 4 befestigt und ist über zwei Stromschienen 24 und zwei Kontaktschuhe 11 und 13 mit dem Umrichter 34 elektrisch verbunden. Als Alternative kann die Stromschiene mit Kontaktschuhen durch eine flexible Energiekette ersetzt werden, die H₂-resistent ist. Der Induktor 3 ist beidseitig auch über zwei flexible Leitungen 10 und 14, beispielsweise schlauchartig, mit der Wasserkühlung 37 verbunden. Der Induktor 3 stellt die nötige Energie für eine dosierte Erwärmung der Eisenkörner-Masse 5 im Keramik-Tiegel 4 bereit.

Eine andere in den Zeichnungen nicht dargestellte Lösung ersetzt die Wasserleitungen 10 und 14 durch eine Lösung, die ein Drehen und nicht ein Hin- und Herverschwenken des Tiegels 4 gestattet. Dieses kann beispielsweise durch eine wärmeisolierte Durchführung am Dampfrohr 6 sein.

Der Tiegel 4 besteht aus einem elektrisch isolierenden Keramikkörper, insbesondere in Form von einer Trommel. Der Tiegel 4 ist hochtemperaturfest und lässt den Wasserdampf durch eine innere mit Öffnungen versehene Zylinderfläche 26 hindurch, die durch das Dampfrohr 6 gebildet wird. Diese mit Öffnungen versehene Zylinderfläche bildet die innere Zylinderfläche vom Keramiktiegel und umhüllt den Dampfeintrittsraum mit dem Dampfrohr. Dabei sind die Öffnungen in ihrer Größe im Verhältnis zur Korngröße der im Tiegel befindlichen Eisenkörner so bemessen, dass die Eisenkörner 5 durch diese Durchlasskanäle nicht hindurchtreten können. Auf der Innenseite, im Ruhezustand oben, des Keramiktiegels 4 sind zwei Temperatursensoren TS / Fig.2 eingebaut, um Temperaturunterschiede in der Metallmasse für die Prozessregelung zu erfassen.

Der Keramiktiegel 4 und das Dampfrohr 6 sind miteinander axial fest und dampfdicht verbunden. Der Keramiktiegel 4 ist mit Hilfe vom Dampfrohr 6 und der mit diesem verbundenen Antriebswelle 18 im Uhrzeiger- und Gegenuhrzeigersinn mit einem Winkel α von 90° ≤ α ≤ 180° schwenkbar. Wesentlich ist dabei die fortlaufende gegensinnige Verschwenkbewegung des Keramiktiegels 4 im Gehäuse 2 um einen vorbestimmten Drehwinkel. Dieser sollte nicht kleiner als ± 90° sein.

Das hochtemperatur- und hochdruckfeste Dampfrohr 6 ist einerseits zentrisch an beiden Tiegelstirnseiten 20 fest und dampfdicht befestigt und andererseits über Drehdurchführungen und Dampfrohr-Sperrkupplung 16 und Antriebswelle 18 luft- und wasserstoffdicht zentrisch an den beiden Stirnseiten des Generatorgehäuses 2 drehend gelagert. Dabei sind die Temperatur- und Druckwerte für die Festigkeit des Dampfrohrs von der Grösse des Tiegels und auch der Metallmasse abhängig. Eine mögliche Bereichsangabe umfasst einen Temperatur-Bereich von ca. 500 - 700°C und einen Druckbereich > 30 bar. Das Dampfrohr selber ist auf seiner Aussenseite in einem Abstand von einer Wasserdampf-permeablen Keramik-Zylinderfläche 26 umgeben. Diese Keramikzylinderfläche besteht aus einem gaspermeablen Keramikmaterial, während die Seitenwände nicht gasdurchlässig sind. Die Fläche, die das Dampfrohr 6 umhüllt, ist ein untrennbarer Bestandteil des Keramiktiegels 4 und ist dampfdurchlässig.

Auf der Oberfläche des Dampfrohres 6 sind radial mehrere Bohrungen vorhanden, die den Wasserdampf mit hohem Druck durch die gegenüberliegende Keramiktiegelfläche in die Masse der Eisenkörner 5 hineinleiten. Die Eisenkörnerfüllung 5 (Späne etc.) erfolgt durch einen Füllflansch 8 und durch die Deckelöffnung 21. Die Entleerung geschieht über den Deckel-Entleerflansch 23 und den Entleerflansch 19. In der Beschreibung wird hier jeweils auf eine "Eisenkörner"füllung 5 Bezug genommen. Statt Körner einer bestimmten Korngröße können genauso Späne verwendet werden. Wesentlich ist, dass diese eine vorbestimmte (Korn)Grösse haben, so dass sie nicht in den Dampfraum gelangen können. Statt Eisen können auch andere Metalle wie Zn, Mn, und Ni verwendet werden. Auch der Einsatz ihrer reinen Oxide sowie ihrer Mischoxide ist möglich.

Zu dieser Vorrichtung nach Fig. 2 gehören einige Vorrichtungen, die in der Fig. 1 dargestellt sind. Eine Stromversorgung 31 wird vom Netz 30 gespeist. Die Stromversorgung 31 ist mit einem Umrichter 34 verbunden, der Netzwechselstrom in einen geeigneten Wechselstrom umwandelt, dessen Frequenz in Resonanz zur Kombination aus Kapazität des äusseren Schwingkreises, der Induktivitäten der Spule und dem elektrischen Widerstand der Masse der Eisenkörner steht. Bei den Induktivitäten der Spule handelt es sich um den Induktor 3.

Das Generatorgehäuse 2 trennt in Bezug auf die Umgebungsluft den inneren Prozess der Wasserstofferzeugung von der Umgebung und damit diesen von der Aussenluft. Die Innenfläche des Generatorgehäuses 2 wird gegen die Wasserstoffversprödung mit einer Schutzschicht behandelt: Aus dem Stand der Technik ist dafür beispielsweise eine Titan-Aluminium-Nitrid-Schicht mit plättchen-artigem Gefüge bekannt.

Der Keramiktiegel 4 ist ein zylindrischer elektrisch nicht leitender Körper, der eine hochtemperaturfeste drehbare Keramikkonstruktion ist. Er enthält in seinem Innern die Masse der Eisen- oder Stahlkörner. Die Erwärmung dieser Masse geschieht durch ein als Verfahren, in dem in den Keramiktiegel Wechselstrompulse durch die Induktionsspule geleitet werden. Dabei variieren magnetische Induktions-Wechselfelder je nach Temperatur und Prozesszustand im Tiegel und die Erwärmung bzw. Heizung der Körnermasse im Tiegel.

Das Dampfverteilerrohr 6 ist ein drehbares hochdruckfestes Rohr, welches auf seiner Oberfläche über eine Vielzahl von Bohrungen verfügt, die den Wasserdampf durch den ihm gegenüber umliegende gaspermeable Keramikoberfläche 26 in die Masse der Eisen- oder Stahlkörner einleiten. Die äussere Mantelfläche des Keramiktiegels 4 ist nicht gasdurchlässig, weder für Wasserdampf noch für Wasserstoff. Um das Dampfverteilerrohr 6, welches Wasserdampf unter Druck durch die Öffnungen in seiner Oberfläche hindurchlässt, ist ein auf den an den beiden gegenüberliegenden Endflächen vorgesehenen Auflageschultern vorgesehener gaspermeabler Keramikzylinder 26 vorgesehen. Diese Gaspermeabilität gestattet den Durchtritt des unter Druck stehenden Wasserdampfes in die Körnermasse im umgebenden Tiegelraum.

Der Keramiktiegel 4 ist vorzugsweise zu mindestens 2/3 gefüllt, kann aber auch zu mindestens ¾ gefüllt sein. Die Füllmenge ist nach oben mindestens dadurch begrenzt, dass durch die Erzeugung von Magnetit durch Umwandlung der Metall- oder Metalloxidkörner in dem Keramiktiegel das Volumen dieser Füllmasse erheblich ansteigt.

Der Umrichter 34 ist ein Induktionsgenerator. Induktionserwärmung bietet im Vergleich zu anderen Verfahren einen sehr hohen Wirkungsgrad, da die Wärmeenergie gezielt am richtigen Ort des Werkstückes erzeugt wird. Ein Vorteil der Induktionserwärmung ist ebenfalls die berührungslose Energieübertragung zwischen dem Induktor 3 und der Eisenkörnermasse 5, wobei die Energieübertragung ohne eine Verringerung des Wirkungsgrades auch im Vakuum oder durch die Wände eines elektrisch nicht leitenden Behälters wie dem Keramiktiegel 4 möglich wird. Eisen und Stahl sowie die anderen genannten metallischen Elemente, lassen sich leicht erwärmen. Mit mikroprozessorgesteuerten Halbleiter-Umrichtern sind wiederholbare und effiziente Erwärmungs-Prozesse möglich.

Es ist eine Wasserkühlung 33 für den Umrichter 34 und eine Wasserkühlung 37 für den Induktor 3 erforderlich, weil bei diesem industriellen Prozess relativ hohe Ströme fliessen. Zusätzlich zu der Wasserkühlung 37 vom Induktor 3 kann eine in den Zeichnungen nicht dargestellte Wasserkühlung an der Innenseite des Generatorgehäuses 2 vorgesehen sein, um die H₂- und O₂-Gase und die Eisenoxid-Körnermasse 5 bei Bedarf zusätzlich zu kühlen. Die Abwärmenutzung 32 der Prozesswärme der Wasserstoff-Erzeugungsanlage erhöht den Wirkungsgrad des gesamten Systems, indem z.B. über eine Wärmetauscher-Vorrichtung die hervorragende spezifische Wärmeleitfähigkeit von H₂ (entsprechend oben erwähnt) für die Abwärmenutzung benutzt wird.

Ein Elektroantrieb 17 ermöglicht die kontrollierte Schwenkung des Keramiktiegels 4, damit die Eisen- oder Stahlkörner für eine optimale Wärmeleitung zwischen den Körnern durchmischt werden. Dieses kontrollierte Verschwenken kann auch eine durchgehende Drehung in eine Richtung sein, dann ist bei einer solchen Ausführung die flexiblen Leitungen 10 und 14, die den Keramiktiegel mit dem umgebenden Gehäuse verbinden, durch entsprechende elektrische Kontakte und die wasserführenden Leitungen durch eine beispielsweise axiale Zuführung des Kühlwassers zu ersetzen, was aber erheblicher aufwendiger ist und gegenüber einem Verschwenken im angegebenen Rahmen keinen Vorteil hat.

Ein Regelungs- und Steuerungsgerät 41 gewährleistet die sichere Funktion des erforderlichen Prozessablaufs. Es beinhaltet auch sicherheitsbedingte Redundanz-Funktionen in Bezug auf Temperatur, Überdruck, Dichtigkeit bzw. H2-Lecks.

Die Vakuumpumpe 39 ermöglicht die nötige Evakuierung des Generatorgehäuses 2 und des Keramiktiegels 4, insbesondere damit keine Gase im Gehäuse verbleiben. Die Stickstoff-Spülung 38 ermöglicht die Reinigung der Eisenkörnerfüllung 5, des Keramiktiegels 4, des Generatorgehäuses 2 und die Spülung vom O2 aus dem Redoxsystem. Die N2 Spülung wird auch für Druckprüfung eingesetzt. Als letztes wird die Vakuumpumpe eingesetzt, damit der Generatorinhalt möglichst gut evakuiert werden kann, was für beide Prozesse sehr wichtig ist

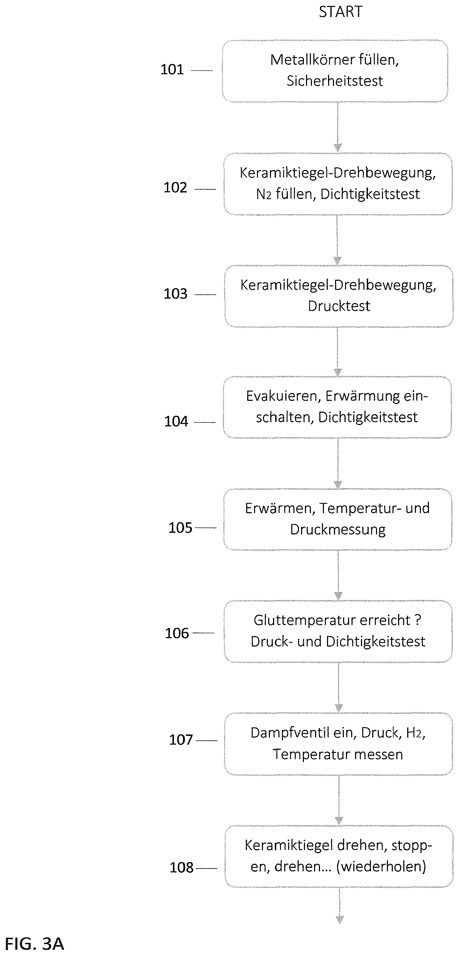

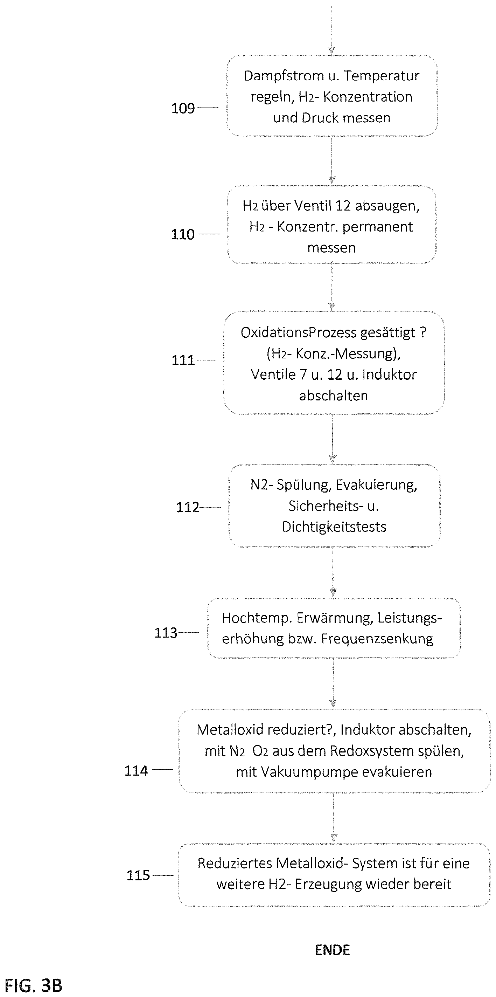

Im Zusammenhang mit den Figs. 3A und 3B wird nun der Ablauf des Verfahrens zur Erzeugung von H2 näher erläutert.

In einem ersten Füllschritt 101 wird der Keramiktiegel 4 mit Eisenkörnern von geeigneter Qualität gefüllt. Diese Körner haben eine prozesstaugliche Korngrösse, sind staubfrei gereinigt und absolut entfettet.

Nach dem Schliessen des Deckelfüllflansches 21 und des Füllflansches 8, wird der Tiegel 4 in einem Testbewegungsschritt 102 vom Antrieb 17 langsam im Uhrzeiger- und Gegenuhrzeigersinn um einen vorbestimmten Winkel gedreht, insbesondere mindestens +-90 Grad. Dabei kontrolliert das Regelungs- und Steuerungsgerät 41 von Anfang an alle relevanten Parameter, die für einen sicheren Prozessablauf unbedingt notwendig sind.

Die Stickstoff-Zufuhr 38 wird eingeschaltet und der Inhalt des Generatorgehäuses 2, Inklusive des Inhaltes vom Tiegel 4 wird mit N₂ bei einem geeigneten Druck gefüllt. Mögliche Drücke liegen insbesondere zwischen 3 und 10 bar aber auch Drücke ausserhalb dieses Bereichs sind einsetzbar. Wenn der dann folgende Dichtigkeitstest 103, insbesondere bei einer begleitenden Schwenkbewegung, positiv abgeschlossen ist, wird das eingeleitete N₂ in einem Vakuumschritt 104 über die Vakuumpumpe 39 vollständig entfernt und der Inhalt des Generators 1 bis zu einem geeigneten Wert 3 evakuiert. Mögliche Drücke liegen insbesondere bei < 0.01 mbar, aber auch geringere Unterdrücke sind möglich. Es folgt ein weiterer, nach der Evakuierung zweiter Dichtigkeitstest. Nach dessen Absolvierung wird ein Heizschritt 105 durchgeführt; dabei wird der Induktor 3 eingeschaltet, während der Tiegel 4 langsam in beide Richtungen geschwenkt wird und die Temperatur der Eisenkörner-Masse überwacht werden. Die Geschwindigkeit der Schwenkbewegungen wird nach Tendenz der Temperaturwerte gemäss eines Programms von Regelungs- und Steuergerät 41 geregelt. Das heisst, wenn die Temperatur absinkt, wird die Induktionsenergie erhöht. Gleichzeitig überwacht der Umrichter 34 die elektrischen Leistungs- und Frequenzwerte unter der Berücksichtigung der Kommunikationsdaten mit Regelungs- und Steuergerät und regelt optimal die nötige Leistung des Induktors 3 für das Eintreten der folgenden nächsten Verfahrensschritte.

Der Induktor 3 erzeugt zuerst in der Masse 5 der Eisenkörner bis zu einer bestimmten Tiefe eine Hysterese-Erwärmung, bei der das von dem Induktor 3 erzeugte magnetische Wechselfeld die magnetische Polarität in der Körnermasse ändert, wobei die Wärmeleitung zwischen den Körnern für die Erreichung einer nötigen Massentemperatur eine wichtige Rolle spielt. Dieser Vorgang dauert solange, bis die Curie-Temperatur (Eisen: 768° C) in der Körnermasse auftritt, bei der die magnetische Permeabilität des Materials auf ca. 1 abgesunken ist. Darüber hinaus beruht die Induktions-Erwärmung auf der Wirbelstrom-Erwärmung, deren Ursache durch die I².R- Verluste des elektrischen Widerstands von der Eisenkörnermasse ist.

In einem Zwischenprüfschritt 106 wird festgestellt, ob die geeignete Temperatur erreicht ist, ansonsten wird Heizschritt 105 weiter ausgeführt. Geeignete Prozesstemperaturen liegen zwischen 550 und 750 Grad Celsius.

Nach Erreichen der besagten geeigneten Temperatur strömt in einem Dampfeinleitungsschritt 107 Heissdampf mit geregelter Strömungsmenge, wobei der Heissdampf aus entmineralisiertem mit genügend hohem Druck, insbesondere zwischen 10 und 30 bar, über das Ventil 7 in das Dampfrohr 6 eingeleitet wird. Anschliessend wird der Dampf entlang des Dampfrohres zuerst durch die auf der Oberfläche radial angeordneten Bohrungen des Dampfrohres und dann durch die innere gegenüberliegende «Keramikfläche» 26 in die Masse der Eisenkörner 5 hineingeleitet. Das Regelungs- und Steuergerät 41 überwacht dabei die Temperatur in der Körnermasse und regelt sie zusammen mit dem Umrichter 34 über die Datenkommunikation nach. Die prozesstaugliche Vorlauftemperatur wird zuerst vom Dampferzeuger 46 geregelt. Wenn Dampf mit niedriger Temperatur in die Eisenkörnermasse eindringt, also in die Spalten und Durchlässe der Körner, kann es kurzzeitig die Masse abkühlen. Regelungs- und Steuergerät 41 zusammen mit Umrichter 34 erhöht die Erwärmungsleistung, bis wieder die Prozesstemperatur stimmt.

Der in den Verfahrensschritten 108 bis 111 ablaufende Erzeugungsprozess kann wie folgt zusammengefasst werden. Zuerst wird der an Eisenkörner vorbeiströmende heisse Wasserdampf durch die Bindung des Sauerstoffs an das entstehende Eisenoxidgitter gespalten und Wasserstoff freigesetzt. Der erzeugte Wasserstoff strömt aus den Randbereichen der Körnermasse mehrheitlich in den Freiraum des Keramiktiegels 4 und anschliessend strömt H₂ durch die feinen Öffnungen 25 an den Stirnseiten 20 des Keramiktiegels in die Freiräume zwischen dem Tiegel und dem Generatorgehäuse 2, während Sauerstoff in gebundener Form in der Eisenkörnermasse bleibt.

Der Prozess erfolgt vollständig emissionsfrei. Somit wird eine nachhaltige H₂-Erzeugung ermöglicht, weil sie nicht auf fossilen Rohstoffen beruht und ohne Ausstoss von CO₂ erfolgt.

Man kann die exotherme Reaktion wie folgt charakterisieren

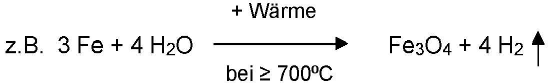

Während des Ablaufs der Reaktion, der hier im Reaktionsschritt 108 als im Wesentlichen ablaufend angesehen, wird der Keramiktiegel 4 weiter geschwenkt, gestoppt, zurück geschwenkt und dieser Vorgang wird entsprechend wiederholt.

Das Regelungs- und Steuergerät 41 kontrolliert mit Hilfe von einem Wasserstoff-Sensor HS die Konzentration von den erzeugten H₂ im Generatorgehäuse 2 in einem Konzentrationsmessschritt 109. Wenn die Konzentration von H₂ nicht mehr ansteigt, dann wird in einem Entleerungsschritt 110 das Ventil 12 geöffnet und H₂ strömt zum Filter 36 zur Reinigung bzw. zum Kondensabscheider. Die Konzentration von H₂ wird während des Prozesses ständig kontrolliert.

Der Vorgang der H₂- Erzeugung dauert so lange, oder besser kann so lange dauern, bis die Eisenkörnermasse 5 komplett oxidiert ist bzw. das System gesättigt ist. Diese Prüfung auf Sättigung 111 kann indirekt durch eine H2- Konzentrationsmessung vorgenommen werden. Wenn diese Sättigung, beispielsweise 90%, erreicht worden ist, wird die Dampfzufuhr durch das Ventil 7 gesperrt. Die Stromversorgung für den Induktor 3 wird ausgeschaltet, während der Keramiktiegel 4 weiterhin geregelt in beide Richtungen geschwenkt wird. Anschliessend wird der Inhalt des Generatorgehäuses 2 in einem Reinigungsschritt 112 mit N₂ gespült.

Der Inhalt des Generatorgehäuses 2 wird mit der Vakuumpumpe 39 bis zu einem geeigneten Unterdruckwert von beispielsweise kleiner 0,01 mbar evakuiert. In diesem Zusammenhang wird zudem ein weiterer Dichtigkeitstest des Generatorgehäuses 2 durchgeführt.

Wenn der Dichtigkeitstest erfolgreich absolviert worden ist, dann wird der Induktor **3** wieder eingeschaltet, während der Keramiktiegel **4** geregelt in beide Richtungen schwenkt, um die Wärmeleitung zwischen den oxidierten Eisenkörnern aufrechtzuerhalten.

Für eine beschleunigte Regeneration der Eisenoxide im Hochtemperatur-Erwärmungsschritt 113 wird im Umrichter 34 die Wechselstrom-Frequenz auf einen optimalen Wert für eine tiefenwirksamere Induktion gesenkt und die Leistung für eine höhere Erwärmung gesteigert. Diese Frequenz- bzw. Induktionsleistungswerte sind von Parametern wie Tiegelgrösse, Wanddicke, Füllmasse usw. abhängig. Im fortlaufenden Prozess herrscht mit der Zeit eine höhere Temperatur in der Masse der Eisenkörner, um die Eisenoxide zu reduzieren. Bei diesen Temperaturen werden die im ersten Schritt gebildeten Eisenoxid-Moleküle chemisch reduziert, indem die Sauerstoff-Moleküle freigesetzt werden und somit das Metalloxid regeneriert wird bzw. wieder in den energiereicheren Zustand reduziert wird.

Diese endotherme Reaktion läuft wie folgt ab:

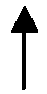

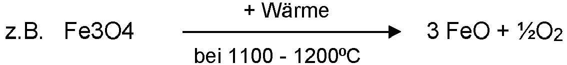

Nach erfolgreicher Reduktion des Eisenoxids wird in einem Abschalteschritt 114 der Induktor 3 ausgeschaltet und die Temperatur der Eisenoxidkörner durch Wasserkühlung 37 auf eine geeignete Temperatur gesenkt. Dabei wird ein grosser Teil dieser Wärme, die durch die Kühlung erzeugt worden ist, über einen Wärmetauscher (siehe Abwärmenutzung 32) für die Erhitzung des Wasserdampfes für den nächsten Ablauf benutzt. Stickstoff N₂-Zufuhr 38 wird eingeschaltet und der aus dem Metalloxid MO freigesetzte Sauerstoff O₂ aus dem Redoxsystem gespült, während weiterhin der Keramiktiegel 4 geregelt in beide Richtungen geschwenkt wird. Der Abschalteschritt 114 kann somit auch als Sauerstoffentfernungsschritt bezeichnet werden.

Das geschlossene System des Wasserstoffgenerators 1 hat den Vorteil, dass das Produkt (FeO) gegenüber dem gleichzeitig produzierten Sauerstoff nicht wesentlich reaktiv ist, weil hier keine Probleme wie in einem Reaktor unter atmosphärischen Bedingungen entstehen. Je nach zu erreichenden Prozess-Zyklenzahl kann vorteilhafterweise Al2O3 in die Eisenkörnermasse in kleinen Mengen zugefügt werden.

Der gewonnene Sauerstoff 35 wird als zusätzlicher Vorteil in diesem Prozess zur nächsten Verarbeitung weitergeleitet.

Nach dieser abgeschlossenen Prozessperiode 115 ist der Wasserstoffgenerator für einen neuen Ablauf wieder bereit, wobei das Ausgangsprodukt Eisenoxid und nicht Eisen ist, Dafür werden die Funktionsablauf- Schritte 108 bis 114 wiederholt.

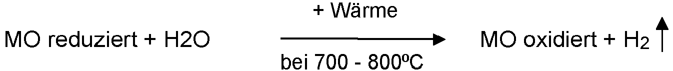

Prinzipieller Vorteil dieser Art der Wasserstoffgewinnung ist der dabei erzielbare hohe Wirkungsgrad von Prozesswärme zum Brennwert des Wasserstoffs.

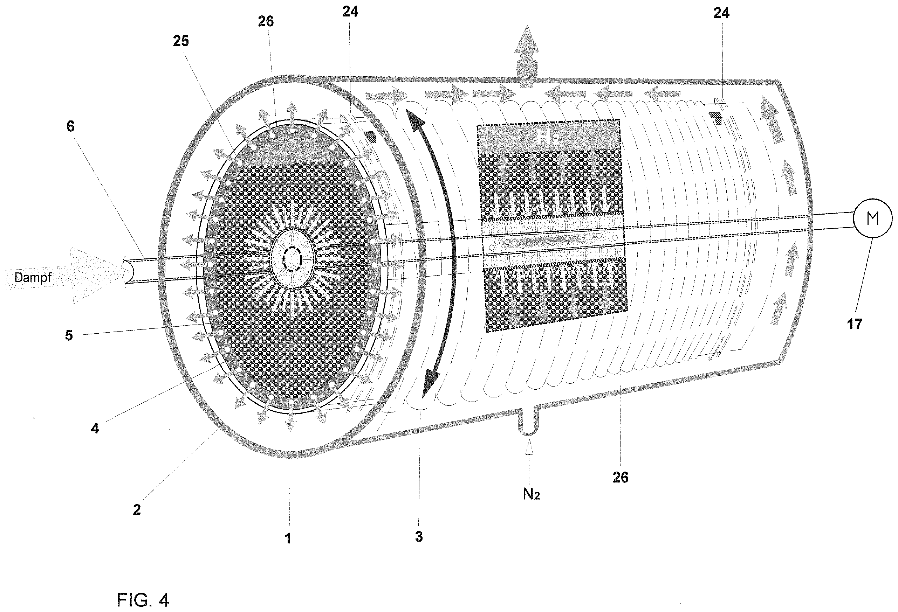

Die Fig. 4 schliesslich zeigt eine schematische im Wesentlichen perspektivische und teilweise geschnittene Darstellung des Keramiktiegels 4 nach Fig. 2, das heisst, den im Innern der Reaktionskammer 2 um die Achse des Dampfrohrs 6 aufgehängten verschwenkbaren Behälter, dessen fehlende Vorderwand einen Blick auf die Fluidflüsse zulässt. Der aus dem Dampfrohr 6 austretende Wasserdampf entweicht durch die wasserdampfpermeable innere Keramikzylinderwand, was durch die hellen Sonnenstrahlen ähnlichen Pfeile dargestellt ist; damit durchdringt er die Metallkörnerfüllung, die hier den Keramiktiegel 4, den kompletten gaspermeablen Keramikzylinder 26 umgibt und nur einen oberen Freiraum offenlässt. Das bei der Oxidation der Metall- bzw. Metalloxidkörner entstehende Wasserstoff tritt durch die seitlichen Öffnungen 25 aus, die hier sehr nahe zum Mantelzylinder bzw. in dem Mantelzylinder dargestellt sind. Der Insert im Bild des Zylinders zeigt die fortlaufende Umwandlung des Wasserdampfes (hier jeweils durch acht helle Pfeile für eine radiale Richtung dargestellt in Wasserstoffgas, was hier durch vier dunklere Pfeile symbolisiert ist. Zusätzlich ist der Induktor 3 teilweise und schematisch als eine Aufwicklung um den Keramikzylinder des Tiegels 4 dargestellt,

**BEZUGSZEICHENLISTE**

| | | | |
|---|---|---|---|
| 1 | H₂-Generator | 20 | Stirnseite des Tiegels |
| 2 | Generatorgehäuse / Reaktionskammer | 21 | Deckel-Füllflansch |
| | | 22 | Temperatur-Sonde |
| 3 | Induktor | 23 | Deckel-Entleerflansch |
| 4 | Keramiktiegel | 24 | Strom-Schiene |
| 5 | Eisenkörnerfüllung | 25 | feine Öffnungen |
| 6 | Dampfverteilerrohr | 26 | gaspermeabler Keramikzylinder |
| 7 | gesteuertes Ventil | | |
| 8 | Füll-Flansch | 30 | Netz |
| 9 | Vorlauf-Induktorkühlung | 31 | Stromversorgung |
| 10 | flexible Leitung | 32 | Abwärme-Nutzung |
| 11 | erster Kontaktschuh | 33 | Wasserkühlung |
| 12 | Sperrventil gesteuert | 34 | Umrichter |
| 13 | zweiter Kontaktschuh | 35 | Sauerstoff O₂ |
| 14 | flexible Leitung | 36 | Filter- H₂ Reinigung |
| 15 | Rücklauf-Induktorkühlung | 37 | Wasserkühlung |
| 16 | Dampfrohr-Sperrkupplung | 38 | Stickstoff N₂- Spülung |
| 17 | Elektroantrieb | 39 | Vakuum- Pumpe |
| 18 | Antriebswelle | 40 | Leistung & Frequenz- |
| 19 | Entleerungsflansch | | |
| | Einstellung für ElektroAntrieb | 107 | Dampfeinleitungsschritt |
| | | 108 | Reaktionsschritt |
| 41 | Regelungs- und | 109 | Konzentrationsmessschritt |
| | Steuerungsgerät | 110 | Entleerungsschritt |
| 42 | Druck- , Temperatur- und H₂-Sensoren | 111 | Prüfung auf Sättigung |
| | | 112 | Reinigungsschritt |
| 43 | Kompressor | 113 | Höchsttemperatur- |
| 44 | H₂- Speicher | | Erwärmungsschritt |
| 45 | N2 | 114 | Abschalteschritt |
| | | 115 | Prozessende oder Rückverweisung |
| 46 | Dampferzeuger | | |
| 101 | Füllschritt | | |
| 102 | Testschritt | DS | Drucksensor |
| 103 | Dichtigkeitstest | HS | H2 - Sensor |
| 104 | Vakuumschritt | OS | O2 - Sensor |
| 105 | Heizschritt | NS | N2 - Sensor |
| | | TS | Temperatursensor |
| 106 | Zwischenprüfschritt | | |

## Patentansprüche

1. Vorrichtung zur Wasserstofferzeugung auf thermochemischem Weg mit einer Reaktionskammer (2), in der ein vorbestimmte Menge Metall (5) aus der Gruppe umfassend Fe, Zn, Mn und Ni, oder ein Metalloxid von einem dieser Metalle oder Mischungen davon vorgesehen ist, mit einer Wasserdampfzuleitung (6), durch die Wasserdampf über die Oberfläche des Metalls (5) oder des Metalloxid leitbar ist, um in einer Gas-Festphasenreaktion durch Energiezufuhr im ersten Schritt Wasserdampf durch die Anlagerung von Sauerstoff an das Metall oder Metalloxid thermisch zu spalten und Wasserstoff freizusetzen, und mit einer Heizung (3), um in einem zweiten Schritt bei einer gegenüber dem ersten Schritt höheren Temperatur das Metalloxid zu regenerieren und den gebundenen Sauerstoff freizusetzen, sodass das Metall oder das Metalloxid für eine weitere Reaktion zur Verfügung steht, **dadurch gekennzeichnet, dass** die Reaktionskammer (2) über einen zylindrischen inneren Keramiktiegel (4) verfügt, der um seine Drehachse verschwenkbar in der Reaktionskammer (2) aufgehängt ist, dass die Wasserdampfzuleitung ein auf der Achse des Keramiktiegels (4) angeordnetes Wasserdampfrohr (6) mit einer Vielzahl von in seinem Mantel vorgesehenen Gasdurchtrittsöffnungen versehen ist, dass die Heizung ein Induktor (3) ist, der auf der Zylinderwand des zylindrischen inneren Keramiktiegels (4) für ein Aufheizen des Innenraums des Keramiktiegels (4) vorgesehen ist, dass ein Antrieb (17) vorgesehen ist, um den Keramiktiegel (4) innerhalb des Gehäuses (2) zu schwenken, und dass das Metall als Schüttgut (5) in dem Keramiktiegel (4) vorgesehen ist.

2. Vorrichtung nach Anspruch 1, **dadurch gekennzeichnet, dass** eine Kontrolleinheit (41) vorgesehen ist, die mit dem Antrieb (17) verbunden ist, wobei die Kontrolleinheit (41) konfiguriert ist, um den Keramiktiegel (4) in eine Richtung oder wechselweise in beide Richtungen um seine Achse schwenken zu lassen.

3. Vorrichtung nach Anspruch 2, **dadurch gekennzeichnet, dass** die Schwenkbewegung eine Drehung des Keramiktiegels (4) um einen Winkel von mehr zwischen ± 90° und weniger als ± 360° oder von mehr als ±180° aber weniger als ±360° umfasst.

4. Vorrichtung nach einem der Ansprüche 1 bis 3, **dadurch gekennzeichnet, dass** in dem Keramiktiegel (4) eine das Wasserdampfrohr (6) umgebender gaspermeabler oder wasserdampfpermeabler Keramikzylinderfläche (26) vorgesehen ist, welche angrenzend an oder in einem Abstand zu dem Wasserdampfrohr (6) vorgesehen ist.

5. Vorrichtung nach einem der Ansprüche 1 bis 4, **dadurch gekennzeichnet, dass** in den Stirnseiten des Keramiktiegels (4) eine Vielzahl von Gasdurchlass-Öffnungen (25) vorgesehen sind, vorzugsweise in einem radialen Abstand von der Tiegelachse zwischen der Hälfte und 90 % des Radius des Keramiktiegels (4).

6. Thermochemisches Verfahren zur Wasserstofferzeugung, bei dem Wasserdampf durch ein Metall oder ein erstes Metalloxid (5) geleitet wird, dabei unter Abspaltung von Wasserstoff das Metall oder das erste Metalloxid (5) oxidiert und das entstandene zweite oxidierte Metalloxid anschliessend in einer endothermen chemischen Reaktion wiederum reduziert und erneut in den Reaktionsprozess eingebracht wird, **dadurch gekennzeichnet, dass** die Energie für die endotherme chemische Reaktion durch eine auf der Zylinderwand eines zylindrischen Keramiktiegels (4) für ein Aufheizen des Innenraums des Keramiktiegels (4) angeordnete Induktorheizung (3) in das Metalloxid eingebracht wird, wobei das Metall oder Metalloxid als Schüttgut in dem zylindrischen inneren Keramiktiegel (4) eingebracht worden ist, der um seine Drehachse verschwenkbar in der Reaktionskammer (2) aufgehängt ist, dass die Wasserdampfzuleitung ein auf der Achse des Keramiktiegels (4) angeordnetes Wasserdampfrohr (6) mit einer Vielzahl von in seinem Mantel vorgesehenen Gasdurchtrittsöffnungen ist, und dass der Keramiktiegel (4) innerhalb des Gehäuses (2) mit einem Antrieb (17) gedreht wird.

7. Verfahren nach Anspruch 6, **dadurch gekennzeichnet, dass** eine mit dem Antrieb (17) verbundene Kontrolleinheit (41) konfiguriert wird, um den Keramiktiegel (4) um einen vorbestimmten Winkel in eine Richtung oder wechselweise in beide Richtungen um seine Achse schwenken zu lassen.

8. Verfahren nach Anspruch 7, **dadurch gekennzeichnet, dass** die Schwenkbewegung eine Drehung des Keramiktiegels (4) um einen Winkel von mehr zwischen ± 90° und weniger als ± 360° oder von mehr als ± 180 Grad aber weniger als ± 360 Grad umfasst.

9. Verfahren nach einem der Ansprüche 6 bis 8, **dadurch gekennzeichnet, dass** der gewonnene Wasserstoff durch eine in den Stirnseiten des Keramiktiegels (4) angeordneten Vielzahl von Gasdurchlass-Öffnungen 25 in die Reaktionskammer (2) übergeleitet wird.

## Claims

1. Apparatus for producing hydrogen by the thermochemical route, having a reaction chamber (2) in which a predetermined quantity of metal (5) from the group comprising Fe, Zn, Mn and Ni, or a metal oxide of one of these metals or mixtures thereof, is provided, having a water vapour feed line (6) through which water vapour can be conducted over the surface of the metal (5) or of the metal oxide, in order to thermally split water vapour by the addition of oxygen to the metal or metal oxide in a gas-solid phase reaction by supplying energy in the first step and to release hydrogen, and with a heater (3) in order to regenerate the metal oxide in a second step at a higher temperature than in the first step and to release the bound oxygen, so that the metal or the metal oxide is available for a further reaction, **characterized in that** the reaction chamber (2) has a cylindrical inner ceramic crucible (4) which is suspended in the reaction chamber (2) so as to be pivotable about its axis of rotation, **in that** the water vapour supply line is a water vapour tube (6) arranged on the axis of the ceramic crucible (4) and provided with a plurality of gas passage openings provided in its casing, **in that** the heater is an inductor (3) which is provided on the cylinder wall of the cylindrical inner ceramic crucible (4) for heating the interior of the ceramic crucible (4), **in that** a drive (17) is provided in order to swivel the ceramic crucible (4) within the housing (2), and **in that** the metal is provided as bulk material (5) in the ceramic crucible (4).

2. Device according to claim 1, **characterized in that** a control unit (41) is provided, which is connected to the drive (17), wherein the control unit (41) is configured to allow the ceramic crucible (4) to pivot about its axis in one direction or alternately in both directions.

3. Device according to claim 2, **characterized in that** the pivoting movement comprises a rotation of the ceramic crucible (4) by an angle of more than between ± 90° and less than ± 360° or of more than ±180° but less than ±360°.

4. Device according to any one of claims 1 to 3, **characterized in that** a gas-permeable or water vapour-permeable ceramic cylinder surface (26) surrounding the water vapour tube (6) is provided in the ceramic crucible (4), which surface is provided adjacent to or at a distance from the water vapour tube (6).

5. Device according to any one of claims 1 to 4, **characterized in that** a plurality of gas passage openings (25) are provided in the end faces of the ceramic crucible (4), preferably at a radial distance from the crucible axis of between half and 90 % of the radius of the ceramic crucible (4).

6. Thermochemical process for generating hydrogen, in which water vapour is passed through a metal or a first metal oxide (5), wherein the metal or the first metal oxide (5) is oxidized with the elimination of hydrogen and the resulting second oxidized metal oxide is then reduced again in an endothermic chemical reaction and reintroduced into the reaction process, **characterized in that** the energy for the endothermic chemical reaction is introduced into the metal oxide by an inductor heater (3) arranged on the cylinder wall of a cylindrical ceramic crucible (4) for heating the interior of the ceramic crucible (4), wherein the metal or metal oxide has been introduced as bulk material into the cylindrical inner ceramic crucible (4), which is suspended in the reaction chamber (2) so as to be pivotable about its axis of rotation, **in that** the water vapour supply line is a water vapour pipe (6) arranged on the axis of the ceramic crucible (4) and having a plurality of gas passage openings provided in its casing, and **in that** the ceramic crucible (4) is rotated within the housing (2) by means of a drive (17).

7. Method according to claim 6, **characterized in that** a control unit (41) connected to the drive (17) is configured to cause the ceramic crucible (4) to pivot about its axis by a predetermined angle in one direction or alternately in both directions.

8. Method according to claim 7, **characterized in that** the pivoting movement comprises a rotation of the ceramic crucible (4) by an angle of more than between ± 90° and less than ± 360° or of more than ± 180 degrees but less than ± 360 degrees.

9. Method according to any one of claims 6 to 8, **characterized in that** the hydrogen obtained is transferred into the reaction chamber (2) through a plurality of gas passage openings (25) arranged in the end faces of the ceramic crucible (4).

## Revendications

1. Dispositif pour la production d'hydrogène par voie thermochimique avec une chambre de réaction (2), dans laquelle est prévue une quantité prédéterminée de métal (5) du groupe comprenant Fe, Zn, Mn et Ni, ou un oxyde métallique de l'un de ces métaux ou des mélanges de ceux-ci, avec une conduite d'alimentation en vapeur d'eau (6), par laquelle la vapeur d'eau peut être conduite sur la surface du métal (5) ou de l'oxyde métallique, pour, dans une réaction gaz-phase solide, par apport d'énergie, dans une première étape, décomposer thermiquement la vapeur d'eau par fixation d'oxygène sur le métal ou l'oxyde métallique et libérer de l'hydrogène, et avec un chauffage (3) pour, dans une deuxième étape, à une température supérieure à celle de la première étape, régénérer l'oxyde métallique et libérer l'oxygène fixé, de sorte que le métal ou l'oxyde métallique est disponible pour une prochaine réaction, **caractérisé en ce que** la chambre de réaction (2) dispose d'un creuset intérieur cylindrique en céramique (4) qui est suspendu dans la chambre de réaction (2) de manière à pouvoir pivoter autour de son axe de rotation, **en ce que** la conduite d'alimentation en vapeur d'eau est un tube de vapeur d'eau (6) disposé sur l'axe du creuset en céramique (4) et pourvu d'une pluralité d'ouvertures de passage de gaz prévues dans son enveloppe, **en ce que** le chauffage est un inducteur (3) qui est prévu sur la paroi cylindrique du creuset intérieur cylindrique en céramique (4) pour un chauffage de l'intérieur du creuset en céramique (4), **en ce qu'**un entraînement (17) est prévu pour faire pivoter le creuset en céramique (4) à l'intérieur du boîtier (2), et **en ce que** le métal est prévu en tant que produit en vrac (5) dans le creuset en céramique (4).

2. Dispositif selon la revendication 1, **caractérisé en ce qu'**il est prévu une unité de commande (41) qui est reliée à l'entraînement (17), l'unité de commande (41) étant configurée pour faire pivoter le creuset en céramique (4) autour de son axe dans une direction ou alternativement dans les deux directions.

3. Dispositif selon la revendication 2, **caractérisé en ce que** le mouvement de pivotement comprend une rotation du creuset en céramique (4) d'un angle supérieur à ± 90° et inférieur à ± 360° ou supérieur à ±180° mais inférieur à ±360°.

4. Dispositif selon l'une quelconque des revendications 1 à 3, **caractérisé en ce qu'**il est prévu dans le creuset en céramique (4) une surface cylindrique en céramique (26) perméable aux gaz ou perméable à la vapeur d'eau entourant le tube de vapeur d'eau (6), qui est prévue de manière adjacente au tube de vapeur d'eau (6) ou à une certaine distance de celui-ci.

5. Dispositif selon l'une des revendications 1 à 4, **caractérisé en ce qu'**une pluralité d'ouvertures de passage de gaz (25) sont prévues dans les faces frontales du creuset en céramique (4), de préférence à une distance radiale de l'axe du creuset comprise entre la moitié et 90 % du rayon du creuset en céramique (4).

6. Procédé thermochimique pour une production d'hydrogène, dans lequel on fait passer de la vapeur d'eau à travers un métal ou un premier oxyde métallique (5), on oxyde alors le métal ou le premier oxyde métallique (5) en dégageant de l'hydrogène et on réduit ensuite à nouveau le deuxième oxyde métallique oxydé formé dans une réaction chimique endothermique et on le réintroduit dans le processus de réaction, **caractérisé en ce que** l'énergie pour la réaction chimique endothermique est introduite dans l'oxyde métallique par un chauffage par inducteur (3) disposé sur la paroi cylindrique d'un creuset céramique cylindrique (4) pour un chauffage de l'intérieur du creuset céramique (4), le métal ou l'oxyde métallique ayant été introduit en vrac dans le creuset intérieur cylindrique en céramique (4) qui est suspendu dans la chambre de réaction (2) de manière à pouvoir pivoter autour de son axe de rotation, **en ce que** la conduite d'alimentation de vapeur d'eau est un tube de vapeur d'eau (6) disposé sur l'axe du creuset en céramique (4) et comportant une pluralité d'ouvertures de passage de gaz prévues dans son enveloppe, et **en ce que** le creuset en céramique (4) est mis en rotation à l'intérieur du boîtier (2) à l'aide d'un entraînement (17).

7. Procédé selon la revendication 6, **caractérisé en ce qu'**une unité de commande (41) reliée à l'entraînement (17) est configurée pour faire pivoter le creuset en céramique (4) d'un angle prédéterminé dans une direction ou alternativement dans les deux directions autour de son axe.

8. Procédé selon la revendication 7, **caractérisé en ce que** le mouvement de pivotement comprend une rotation du creuset en céramique (4) d'un angle supérieur à ± 90° et inférieur à ± 360° ou supérieur à ± 180 degrés mais inférieur à ± 360 degrés.

9. Procédé selon l'une des revendications 6 à 8, **caractérisé en ce que** l'hydrogène obtenu est transféré dans la chambre de réaction (2) par une pluralité d'ouvertures de passage de gaz 25 disposées dans les faces frontales du creuset céramique (4).
